# EUROPEAN PATENT SPECIFICATION

(11) **EP 4 349 924 B1**
(45) Date of publication and mention of the grant of the patent: **10.09.2025**
(21) Application number: 23813539.6
(22) Date of filing: 19.07.2023
(51) Int. Cl.: C09D 5/00, C09D 5/08, C09D 133/00, C09D 163/00, C09D 7/61, B05D 7/00

(54) **COATING COMPOSITION FOR UNDERCOAT, AND COATING FILM**
BESCHICHTUNGSZUSAMMENSETZUNG FÜR GRUNDBESCHICHTUNG UND BESCHICHTUNGSFILM
COMPOSITION DE REVÊTEMENT POUR SOUS-COUCHE, ET FILM DE REVÊTEMENT

(30) Priority: 09.08.2022 JP 2022127312
(43) Date of publication of application: 10.04.2024
(73) Proprietor: Nippon Paint Marine Coatings Co., Ltd., Osaka 531-8511 (JP)
(72) Inventor: OHTOMO, Satoru, Osaka-shi Osaka 5318511 (JP); HATANAKA, Teruhisa, Osaka-shi Osaka 5318511 (JP)
(74) Representative: Vossius & Partner Patentanwälte Rechtsanwälte mbB
(86) International application number: PCT/JP2023/026365
(87) International publication number: WO 2024/034337

(56) References cited:
- EP-A1- 1 526 150
- WO-A1-2004/083327
- WO-A1-2019/014414
- WO-A2-2006/081476
- WO-A2-2009/141438
- JP-A- 2002 363 480
- JP-A- 2009 197 106
- JP-A- 2019 085 460

## Description

### TECHNICAL FIELD

The present invention relates to a coating composition for undercoating. The present invention also relates to a coating film formed from the coating composition for undercoating, an article that has the coating film, and the like.

### BACKGROUND ART

As for watercrafts and the like, the surface is commonly subjected to anticorrosive coating for a purpose of imparting an anticorrosive property against a strictly corrosive environment. An antifouling paint is applied on the anticorrosive coating in many cases. For example, Japanese Patent Laying-Open No. 2009-197106 (PTL 1) discloses an anticorrosive coating composition comprising: a bisphenol-type epoxy resin; (b) an ethylene-vinyl acetate copolymer; and (c) an amine-type curing agent.
WO 2019/014414 A1 discloses a curable film-forming composition is provided, comprising: (a) a polymeric binder comprising reactive functional groups; (b) a curing agent comprising functional groups that are reactive with the reactive functional groups of (a); and (c) a polysiloxane resin comprising aromatic functional groups and terminal active hydrogen groups. In WO 2006/081476 A2, a water-based coating is described comprising colloidal silica and lamellar materials such as glas flakes or mica admixed with a water-based film-forming polymeric carrier such as an epoxy. EP1526150 A1 relates to anti-skid coating compositions comprising a first component comprising a polysiloxane which may be functionalized with epoxy groups, and a second component comprising an amino hardener and optionally a catalyst. WO 2004/083327 is concerned with a UV curable paint composition comprising 30 to 95 parts by weight of a UV curable composition with UV curable oligomer, UV curable monomer, photoinitiator and photosensitizer; and 5 to 70 parts by weight of one or more cellulose-modified resins selected from a group consisting of cellulose acetate, cellulose acetate butyrate, cellulose acetate propionate, cellulose propionate, cellulose-modified urethane acrylate, and nitrocellulose. WO2009/141438 A2 discloses a coating system consisting of : a first layer of a primer composition comprising an epoxy-based binder system having a volume solids % (VS%) of at least 82%; and a second layer of top-coat composition comprising a polyurea-based binder system having a VS% of at least 82%; wherein the weighted average VS% of the coating system is at least 84%. JP 2002-363480 A is concerned with a photocurable primer composition comprising (A) an acrylic resin having a polymerizable unsaturated group in a side chain via a urethane bond and containing 0.2 to 2.0 mol/kg of the polymerizable unsaturated group in the solid content of the resin (A); (B) a urethane (meth)acrylate oligomer containing one or more polymerizable unsaturated groups in one molecule; (C) other polymerizable unsaturated compounds; (D) an extender pigment; and (E) a photopolymerization initiator.

### SUMMARY OF INVENTION

### TECHNICAL PROBLEM

When the conventional anticorrosive coating composition is applied on an object to be coated and then finish coating is performed thereon, a long term from applying the anticorrosive coating composition until applying the finish coating may deteriorate adhesiveness between the coating film formed from the anticorrosive coating composition and the finish coating film. Meanwhile, when the above term is shortened in order to achieve adhesiveness to the finish coating film, the coating process becomes complex, and a coating operator is subjected to harsh working environment.

An object of the present invention is to provide a novel coating composition for undercoating that can form a coating film with good adhesiveness to a finish coating film even when a term until applying the finish coating is long, in other words, that can lengthen a term until applying the finish coating while keeping good adhesiveness to the finish coating film. Other objects of the present invention are to provide a coating film formed by using the coating composition for undercoating, an article that has the coating film (undercoating film), and a method for forming a coating film using the coating composition for undercoating.

### SOLUTION TO PROBLEM

The present invention provides the following coating composition for undercoating, coating film, method for forming a coating film, method for forming a multilayer coating film, and an article.
[1] A coating composition for undercoating, comprising:
   an acryl resin; and
   an epoxy resin, wherein
   the acryl resin has a solubility parameter of 9.0 or more and 12 or less and a weight average molecular weight of 1,000 or more and 95,000 or less, and
   wherein the epoxy resin has a solubility parameter of 10 or more and 12 or less and a weight average molecular weight of 250 or more and 2,500 or less.
[2] The coating composition for undercoating according to [1], wherein a content of the acryl resin is 4 parts by mass or more and 60 parts by mass or less relative to 100 parts by mass of a content of the epoxy resin.
[3] The coating composition for undercoating according to [1] or [2], further comprising an amine-type curing agent.
[4] The coating composition for undercoating according to [3], further comprising a curing accelerator, wherein a content of the curing accelerator is 0.1 part by mass or more and 16 parts by mass or less relative to 100 parts by mass of a content of the epoxy resin.
[5] The coating composition for undercoating according to [3] or [4], wherein
   the coating composition for undercoating is a two-liquid type coating composition for undercoating consisting of a first agent and a second agent,
   wherein the first agent contains the acryl resin and the epoxy resin, and
   wherein the second agent contains the amine-type curing agent.
[6] The coating composition for undercoating according to any of [1] to [5], further comprising a mica, wherein a content of the mica is 2 parts by mass or more and 95 parts by mass or less relative to 100 parts by mass of a total content of the acryl resin and the epoxy resin.
[7] A coating film formed from the coating composition for undercoating according to any of [1] to [6].
[8] A method for forming a coating film, comprising forming an undercoating film on a substrate with the coating composition for undercoating according to any of [1] to [6].
[9] A method for forming a multilayer coating film, comprising:
   forming an undercoating film on a substrate with the coating composition for undercoating according to any of [1] to [6]; and
   forming a finish coating film on the undercoating film with a coating composition for finish coating.
[10] An article, comprising an undercoating film formed from the coating composition for undercoating according to any of [1] to [6].
[11] The article according to [10], further comprising a finish coating film on the undercoating film.

### ADVANTAGEOUS EFFECTS OF INVENTION

The coating composition for undercoating that can form a coating film with good adhesiveness to a finish coating film even when a term until applying the finish paint is long, in other words, that can lengthen a term until applying the finish paint while keeping good adhesiveness to the finish coating film can be provided. In addition, the coating film formed by using the coating composition for undercoating, the article that has the coating film (undercoating film), and the method for forming a coating film using the coating composition for undercoating can be provided.

The coating composition for undercoating according to the present invention is useful as a coating composition for anticorrosion applied for, for example, watercrafts, and other articles such as marine structures including, for example, a bridge, a tank, and a plant.

### DESCRIPTION OF EMBODIMENTS

### <Coating Composition for Undercoating>

The coating composition for undercoating according to the present invention (hereinafter, also simply referred to as "coating composition") contains a prescribed acryl resin (A) and a prescribed epoxy resin (B). Hereinafter, ability to form a coating film with good adhesiveness to a finish coating film even when a term until applying the finish paint is long, in other words, ability to lengthen a term until applying the finish paint while keeping good adhesiveness to the finish coating film is referred to as "excellent interval adhesiveness". The present invention can provide a coating composition that has excellent interval adhesiveness.

In addition, the present invention can provide a coating composition that has excellent interval adhesiveness and excellent shrinkage resistance. The "excellent shrinkage resistance" refers to high ability to inhibit a phenomenon called as shrinkage (this phenomenon is also called as lifting) when a finish coating film is further formed on a coating film (anticorrosive coating film) formed from the coating composition according to the present invention. The shrinkage phenomenon typically refers to a phenomenon of generating wrinkles on an undercoating film to lift a finish coating film itself formed thereon together with the anticorrosive coating film when the finish coating film is formed on the anticorrosive coating film.

For example, when a structure (such as a watercraft) that has a coating film is repaired with coating, an undercoating film is formed by using a coating composition for undercoating (anticorrosive coating composition) on an old finish coating film present on the outermost surface of the structure, and a finish coating film is further formed thereon in some cases. In this case, use of a conventional coating composition for undercoating may cause shrinkage. The coating composition for undercoating according to the present invention can effectively inhibit this shrinkage. The ability to effectively inhibit the shrinkage is presumably because the coating composition contains a prescribed acryl resin (A) and a prescribed epoxy resin (B), and thereby, when a finish coating film is formed on an undercoating film formed from the coating composition, the undercoating film effectively inhibits ooze-out of a solvent contained in the used coating composition for finish coating toward the finish coating film present under the undercoating film to dissolve again the finish coating film.

Hereinafter, components contained or may be contained in the coating composition will be described in detail.

### (1) Acryl Resin

The acryl resin contained in the coating composition is preferably a thermoplastic acryl resin. Examples of the thermoplastic acryl resin include (meth)acryl homopolymers or (meth)acryl copolymers that have a constituent unit derived from a (meth)acrylate ester. The term "(meth)acryl" herein represents at least one of methacryl and acryl. The acryl resin herein encompasses polymers that do not have a constituent unit derived from an acrylate ester and that have a constituent unit derived from methacrylate ester.

Examples of the (meth)acrylate ester include: linear or branched aliphatic (meth)acrylate esters (preferably linear or branched alkyl (meth)acrylate esters) in which an ester moiety has 1 or more and 20 or less carbon atoms, such as methyl (meth)acrylate, ethyl (meth)acrylate, n-propyl (meth)acrylate, iso-propyl (meth)acrylate, n-butyl (meth)acrylate, iso-butyl (meth)acrylate, tert-butyl (meth)acrylate, n-hexyl (meth)acrylate, 2-ethylhexyl (meth)acrylate, octyl (meth)acrylate, lauryl (meth)acrylate, and stearyl (meth)acrylate; hydroxy-group-containing alkyl (meth)acrylate esters in which an ester moiety has 1 or more and 20 or less carbon atoms, such as 2-hydroxyethyl (meth)acrylate, 2-hydroxypropyl (meth)acrylate, 3-hydroxypropyl (meth)acrylate, and 4-hydroxybutyl (meth)acrylate; aryl (meth)acrylates, such as phenyl (meth)acrylate and benzyl (meth)acrylate; alicyclic (meth)acrylate esters (for example, cycloalkyl (meth)acrylates), such as cyclohexyl (meth)acrylate, methylcyclohexyl (meth)acrylate, and isobornyl (meth)acrylate; and aminoalkyl (meth)acrylates, such as N,N-dimethylaminoethyl (meth)acrylate, N,N-diethylaminoethyl (meth)acrylate, and N,N-dimethylaminopropyl (meth)acrylate. The acryl resin may have one or two or more constituent units derived from the (meth)acrylate esters.

The (meth)acrylate ester to form the acryl resin is preferably a (meth)acrylate ester that has no cycloalkyl group. Use of the acryl resin formed from the (meth)acrylate ester that has no cycloalkyl group yields more excellent interval adhesiveness. Examples of the (meth)acrylate ester that has no cycloalkyl group include (meth)acrylate esters other than the alicyclic (meth)acrylate esters among the above examples.

The acryl resin may have a constituent unit derived from a monomer other than the (meth)acrylate ester. Examples of the monomer other than the (meth)acrylate ester include: unsaturated monobasic acids, such as (meth)acrylic acid, cinnamic acid, and crotonic acid; unsaturated dibasic acids and monoalkyl esters thereof, such as maleic acid, fumaric acid, itaconic acid, and monoalkyl esters thereof; dibasic acid adducts of unsaturated monobasic acid hydroxyalkyl esters, such as a maleic acid adduct of 2-hydroxyethyl (meth)acrylate, a phthalic acid adduct of 2-hydroxyethyl (meth)acrylate, and a succinic acid adduct of 2-hydroxyethyl (meth)acrylate; polymerizable unsaturated esters other than (meth)acrylate esters, such as crotonate esters, maleate diesters, and itaconate diesters; and other polymerizable vinyl compounds, such as (meth)acrylamide, (meth)acrylonitrile, styrene, α-methylstyrene, o-, m-, or p-methylstyrene, vinyl acetate, vinyl chloride, vinyl propionate, vinyl benzoate, and vinyltoluene. The acryl resin may have one or two or more constituent units derived from the monomers other than the (meth)acrylate esters.

The acryl resin can be prepared by subjecting a monomer composition to a heating reaction in the presence of a radical polymerization initiator. Examples of the radical polymerization initiator include 2,2'-azobis(isobutyronitrile), 2,2'-azobis(2,4-dimethylvaleronitrile), 2,2'-azobis(2-methylbutyronitrile), benzoyl peroxide, cumene hydroperoxide, lauryl peroxide, di-tert-butyl peroxide, and tert-butylperoxy 2-ethylhexanoate.

Examples of the polymerization method include a solution polymerization in an organic solvent. Examples of the organic solvent include: aromatic hydrocarbon organic solvents, such as toluene and xylene; ketone organic solvents, such as methyl ethyl ketone and methyl isobutyl ketone; ester organic solvents, such as butyl acetate; alcohol organic solvents, such as isopropanol; and aliphatic hydrocarbons, such as mineral spirit, n-hexane, n-octane, 2,2,2-trimethylpentane, isooctane, n-nonane, cyclohexane, and methylcyclohexane. These may be used singly or in combination.

The coating composition contains the acryl resin (A) that has a solubility parameter SP (hereinafter, also simply referred to as "SP") of 9.0 or more and 12 or less and a weight average molecular weight (hereinafter, also simply referred to as "Mw") of 1,000 or more and 95,000 or less. Based on the premise that the coating composition contains the prescribed epoxy resin (B) described later, the coating composition that contains the acryl resin (A) can improve the interval adhesiveness, and furthermore, can improve the shrinkage resistance. The weight average molecular weight herein is a conversion value of a molecular weight measured by gel permeation chromatography (GPC) in terms of a molecular weight of polystyrene as a standard. The coating composition may contain two or more types of the acryl resin (A).

From the viewpoint of improvement of the interval adhesiveness and furthermore the shrinkage resistance, the SP of the acryl resin (A) is preferably 9.2 or more and 12 or less, more preferably 9.4 or more and 12 or less, further preferably 9.5 or more and 11.8 or less, and still further preferably 9.5 or more and 11.6 or less.

The solubility parameter SP of the resin herein can be measured by the following method (reference literature: SUH, CLARKE, J. P. S. A-1, 5, 1671 to 1681 (1967))

At a measurement temperature of 20°C, 0.5 g of a resin is weighed in a 100-mL beaker, 10 mL of a good solvent (acetone) is added by using a volumetric pipette, and dissolved with a magnetic stirrer to prepare a diluted solution. Then, a low-SP poor solvent (n-hexane) is gradually added dropwise into this diluted solution by using a 50-mL burette, and a point where cloudiness occurs in the diluted solution is specified as an amount of the dropped low-SP poor solvent. Separately, a high-SP poor solvent (ion-exchanged water) is gradually added dropwise into the above diluted solution, and a point where cloudiness occurs in the diluted solution is specified as an amount of the dropped high-SP poor solvent. The SP value can be calculated from the amounts of the dropped poor solvents until the cloudiness point with a known calculation method described in the above reference literature and the like.

The SP of the acryl resin (A) can be regulated by adjusting a type and amount of the monomers to constitute the acryl resin (A). For example, use of a monomer that has a polar group (for example, (meth)acrylic acid, 2-hydroxyethyl (meth)acrylate, and the like) tends to increase the SP of the acryl resin (A). Use of a monomer such as an alkyl (meth)acrylate tends to decrease the SP of the acryl resin (A).

The Mw of the acryl resin (A) is preferably 5,000 or more, more preferably 10,000 or more, further preferably 30,000 or more, and still further preferably 50,000 or more from the viewpoint of obtaining a coating composition that has an appropriate viscosity and the viewpoint of improvement of curability of the coating composition. The Mw of the acryl resin (A) is preferably 90,000 or less, and more preferably 78,000 or less from the viewpoint of obtaining a coating composition that has an appropriate viscosity and the viewpoint of improvement of compatibility with the epoxy resin. The above range of the Mw of the acryl resin (A) is advantageous also from the viewpoint of improvement of the interval adhesiveness and/or the shrinkage resistance. An excessively large Mw of the acryl resin (A) fails to sufficiently inhibit the shrinkage.

A glass transition temperature (hereinafter, also simply referred to as "Tg") of the acryl resin (A) is preferably 40°C or more and 90°C or less, more preferably 42°C or more and 88°C or less, further preferably 45°C or more and 85°C or less, still further preferably 50°C or more and 80°C or less, particularly preferably 55°C or more and 75°C or less, and most preferably 60°C or more and 72°C or less from the viewpoint of improvement of the interval adhesiveness and the shrinkage resistance. If the Tg of the acryl resin (A) is less than 40°C, the coating film is easily softened, and thereby tends to cause disadvantage in terms of improvement of the interval adhesiveness and the shrinkage resistance. If the Tg of the acryl resin (A) is more than 90°C, the coating film easily cracks, and thereby tends to cause disadvantage in terms of improvement of the interval adhesiveness and the shrinkage resistance.

The glass transition temperature herein is a temperature measured by using a differential scanning calorimeter (DSC) in accordance with JIS K 7121.

The coating composition may contain an acryl resin (A') other than the acryl resin (A). Note that, a content of the acryl resin (A') is preferably small from the viewpoint of improvement of the interval adhesiveness and the shrinkage resistance. The content of the acryl resin (A') in the coating composition is preferably 50 parts by mass or less, more preferably 30 parts by mass or less, further preferably 10 parts by mass or less, furthermore preferably 5 parts by mass or less, particularly preferably 2 parts by mass or less, and most preferably 0 parts by mass relative to 100 parts by mass of the acryl resin (A).

A content of the acryl resin (A) in the coating composition is preferably 1.0 mass% or more and 40 mass% or less, more preferably 1.3 mass% or more and 20 mass% or less, and further preferably 2.0 mass% or more and 18 mass% or less in a solid content contained in the coating composition. If the content of the acryl resin (A) is less than 1.0 mass%, improvement of the interval adhesiveness and/or the shrinkage resistance may be insufficient. The solid content contained in the coating composition refers to a total of components contained in the coating composition other than a solvent.

The content of the acryl resin (A) in the coating composition is typically 4 parts by mass or more and 60 parts by mass or less, and from the viewpoint of improvement of the interval adhesiveness, preferably 10 parts by mass or more and 60 parts by mass or less, more preferably 10 parts by mass or more and 55 parts by mass or less, further preferably 15 parts by mass or more and 55 parts by mass or less, still further preferably 20 parts by mass or more and 50 parts by mass or less, and particularly preferably 25 parts by mass or more and 45 parts by mass or less relative to 100 parts by mass of a content of the epoxy resin (B) described later.

### (2) Epoxy Resin

Examples of the epoxy resin contained in the coating composition include a bisphenol A-type epoxy resin, a bisphenol F-type epoxy resin, a bisphenol AD-type epoxy resin, a bisphenol S-type epoxy resin, a biphenyl-type epoxy resin, a naphthalene-type epoxy resin, a glycidyl ester-type epoxy resin, a glycidylamine-type epoxy resin, a phenol novolac-type epoxy resin, and a rubber-modified epoxy resin, and the like. Among them, a bisphenol A-type epoxy resin is preferable. Use of the bisphenol A-type epoxy resin can improve curability of the coating composition, and can yield good adhesiveness to a foundation.

The coating composition contains the epoxy resin (B) that has a solubility parameter of 10 or more and 12 or less and a weight average molecular weight of 250 or more and 2,500 or less. Based on the premise that the coating composition contains the aforementioned acryl resin (A), the coating composition that contains the epoxy resin (B) can improve the interval adhesiveness, and can improve the shrinkage resistance. The coating composition may contain two or more types of the epoxy resin (B).

From the viewpoint of compatibility with the acryl resin (A), the SP of the epoxy resin (B) is preferably 10.2 or more and 12 or less, more preferably 10.4 or more and 12 or less, further preferably 10.5 or more and 11.8 or less, and still further preferably 10.6 or more and 11.6 or less.

From the viewpoint of improvement of the interval adhesiveness, an absolute value of a difference between the SP of the acryl resin (A) and the SP of the epoxy resin (B) is preferably within a range of 2.5 or less.

From the viewpoint of improvement of the interval adhesiveness and the shrinkage resistance, the Mw of the epoxy resin (B) is preferably 250 or more and 2,200 or less, more preferably 300 or more and 2,000 or less, further preferably 350 or more and 1,800 or less, and still further preferably 350 or more and 1,500 or less. When the Mw of the epoxy resin (B) is within the above range, the coating composition that has excellent physical properties of the coating film and coating operability is easily obtained.

An epoxy equivalent of the epoxy resin (B) is preferably 100 or more and 3,000 or less, more preferably 150 or more and 1,000 or less, and further preferably 180 or more and 500 or less. The epoxy equivalent of 100 or more tends to easily yield good curability, and easily yield good toughness of the obtained coating film. If the epoxy equivalent is more than 3,000, the curability tends to be deteriorated, or the coating film tends to become hard.

The coating composition may contain an epoxy resin (B') other than the epoxy resin (B). Note that, a content of the epoxy resin (B') is preferably small from the viewpoint of improvement of the interval adhesiveness and the shrinkage resistance. The content of the epoxy resin (B') in the coating composition is preferably 50 parts by mass or less, more preferably 30 parts by mass or less, further preferably 10 parts by mass or less, furthermore preferably 5 parts by mass or less, particularly preferably 2 parts by mass or less, and most preferably 0 parts by mass relative to 100 parts by mass of the epoxy resin (B).

A content of the epoxy resin (B) in the coating composition is preferably 10 mass% or more and 55 mass% or less, more preferably 13 mass% or more and 52 mass% or less, and further preferably 15 mass% or more and 45 mass% or less in a solid content contained in the coating composition. If the content of the epoxy resin (B) is less than 10 mass%, curability of the coating composition may be insufficient.

### (3) Amine-Type Curing Agent

The coating composition may contain an amine-type curing agent. The amine-type curing agent is a curing agent for curing the epoxy resin. Examples of the amine-type curing agent include a polyamine-type curing agent, a modified polyamine-type curing agent, a polyamide-type curing agent, and a modified polyamide-type curing agent. The coating composition may contain one or two or more types of the amine-type curing agent.

Examples of the polyamine-type curing agent include: aliphatic polyamines (such as metaxylenediamine, isophoronediamine, diethylenetriamine, triethylenetetramine, and diaminodiphenylmethane); alicyclic polyamines; and aromatic polyamines, and the like. The modified polyamine-type curing agent is a modified product of the above polyamine, and examples thereof include aliphatic, alicyclic, or aromatic polyamines modified by epoxide addition, Michel addition, Mannich addition, thiourea addition, acrylonitrile addition, ketone blocking, and the like.

Examples of the polyamide-type curing agent include a polyamideamine that is generated by condensation between a dimer acid and a polyamine and that has a reactive primary or secondary amino group in a molecule. The polyamine to form the polyamideamine may be the aforementioned aliphatic polyamines, alicyclic polyamines, aromatic polyamines, and the like.

The modified polyamide-type curing agent is a modified product of the polyamide, and examples thereof include: an epoxy-adduct in which an epoxy compound is added to the polyamide; and a Mannich-modified product of a modified polyamide.

The coating composition may further contain a curing accelerator in addition to the amine-type curing agent. Examples of the curing accelerator include a tertiary amine-type curing accelerator. Examples of the tertiary amine-type curing accelerator include 2,4,6-tris(dimethylaminomethyl)phenol (TAP), dimethylaminoethanol (DMAE), N,N-dimethylaniline (DMA), triethanolamine, and triethylenediamine(1,4-diazabicyclo(2,2,2)octane), and the like.

From the viewpoint of improvement of the interval adhesiveness and the shrinkage resistance, and from the viewpoints of an anticorrosive property, curability, and adhesiveness to a foundation, the amine-type curing agent preferably contains a polyamideamine. From the same viewpoints, the polyamideamine is preferably an aliphatic polyamideamine such as a condensed product between a dimer acid and an aliphatic polyamine, and the like. More preferably, the amine-type curing agent is composed of only the polyamideamine. Meanwhile, from the viewpoint of more improvement of the interval adhesiveness, the amine-type curing agent preferably does not contain an aminosilane.

An amine equivalent of the amine-type curing agent is typically 50 or more and 1000 or less, preferably 50 or more and 800 or less, more preferably 60 or more and 655 or less, and further preferably 70 or more and 500 or less. The amine equivalent of the amine-type curing agent within the above range easily yields the coating composition that has excellent interval adhesiveness, shrinkage resistance, anticorrosive property, curability, and adhesiveness to a foundation.

From the viewpoint of improvement of the interval adhesiveness and the shrinkage resistance, and from the viewpoint of curability and adhesiveness to a foundation, the coating composition preferably contains the polyamideamine curing agent and the tertiary amine-type curing accelerator. In addition, from the same viewpoint, the polyamideamine curing agent is preferably an aliphatic polyamideamine such as a condensed product between a dimer acid and an aliphatic polyamine, and the like.

When the coating composition contains the polyamideamine curing agent and the tertiary amine-type curing accelerator, from the viewpoint of inhibition of decrease in the anticorrosive property, a content ratio between the polyamideamine curing agent and the tertiary amine-type curing accelerator is preferably 2/1 or more and 240/1 or less, more preferably 3/1 or more and 50/1 or less, and further preferably 4/1 or more and 30/1 or less at a mass ratio.

From the viewpoints of the interval adhesiveness, the shrinkage resistance, the anticorrosive property, the curability, the adhesiveness to a foundation, and the like, a content of the amine-type curing agent in the coating composition is preferably 20 parts by mass or more and 60 parts by mass or less, more preferably 25 parts by mass or more and 55 parts by mass or less, and further preferably 30 parts by mass or more and 50 parts by mass or less relative to 100 parts by mass of the content of the epoxy resin (B).

When the amine-type curing agent contains the polyamideamine, a content of the polyamideamine in the coating composition is preferably 20 parts by mass or more and 60 parts by mass or less, more preferably 25 parts by mass or more and 55 parts by mass or less, and further preferably 30 parts by mass or more and 50 parts by mass or less relative to 100 parts by mass of the content of the epoxy resin (B) from the viewpoints of the interval adhesiveness, the shrinkage resistance, the anticorrosive property, the curability, the adhesiveness to a foundation, and the like.

When the amine-type curing agent contains the curing accelerator such as the tertiary amine-type curing accelerator, a content of the curing accelerator in the coating composition is preferably 0.1 part by mass or more and 16 parts by mass or less, more preferably 0.5 parts by mass or more and 15 parts by mass or less, and further preferably 1 part by mass or more and 10 parts by mass or less relative to 100 parts by mass of the content of the epoxy resin (B) from the viewpoints of the interval adhesiveness, the shrinkage resistance, the anticorrosive property, the curability, the adhesiveness to a foundation, and the like.

### (4) Other Components That Coating Composition May Contain

The coating composition may contain one or two or more types of components other than the above. Examples of the other components include pigments, silane coupling agents, antifoaming agents, anti-sagging agents, plasticizers, antifouling agents, water binders, color-separation inhibitors, precipitation inhibitors, coating film-consumption regulators, ultraviolet ray absorbents, surface regulators, viscosity regulators, leveling agents, pigment dispersants, and solvents, or the like. Each of them may be singly used with only one type, or may be used in combination of two or more types thereof.

Examples of the pigments include colored pigments, extender pigments, and antirust pigments, and the like. Examples of the colored pigments include titanium oxide, carbon black, white lead, graphite, zinc sulfide, zinc oxide (zinc white), chromium oxide, yellow nickel-titanium, yellow chromium-titanium, yellow iron oxide, red iron oxide, black iron oxide, phthalocyanine blue, phthalocyanine green, ultramarine blue, benzimidazolone yellow, quinacridone red, and azo-type red and yellow pigments, and the like. Two or more types of the colored pigment may be used.

Examples of the extender pigments include mica (such as Suzorite mica and Kurarite mica), talc, clay, bentonite, calcium carbonate, magnesium carbonate, barium sulfate, silicic acid, silicates, feldspar, alumina, silica white, aluminum oxide hydrate, calcium sulfate, micaceous iron oxide (MIO), glass flake, and the like. Two or more types of the extender pigment may be used.

Among them, the coating composition preferably contains mica. Containing of mica is advantageous in terms of improvement of the interval adhesiveness and the shrinkage resistance. From the viewpoint of improvement of the interval adhesiveness and the shrinkage resistance, the mica preferably has an aspect ratio of 7.5 or more. The aspect ratio within the above range can more effectively inhibit the aforementioned ooze-out of solvent, and thereby can more improve the shrinkage resistance.

The aspect ratio is determined by randomly selecting 20 particles in a microscopic observation image that contains 20 or more particles, and averaging values of aspect ratios of the 20 particles. The aspect ratio is a value of dividing a major diameter of the particle by a thickness thereof.

When the coating composition contains the mica, a content of the mica in the coating composition is preferably 2 parts by mass or more and 95 parts by mass or less, more preferably 3 parts by mass or more and 90 parts by mass or less, and further preferably 5 parts by mass or more and 65 parts by mass or less relative to 100 parts by mass of a total content of the acryl resin (A) and the epoxy resin (B) from the viewpoint of improvement of the interval adhesiveness and the shrinkage resistance.

Examples of the antirust pigments include zinc molybdate, aluminum molybdate, lead cyanamide, red lead, lead suboxide, zinc chromate, zinc powder (Zn), basic lead chromate, basic lead sulfate, calcium plumbate, aluminum tripolyphosphate, zinc phosphate, calcium phosphate, aluminum powder (Al), and gypsum hemihydrate, and the like. Two or more types of the antirust pigment may be used.

Preferable examples of the silane coupling agent are alkoxysilane compounds. Examples of the alkoxysilane compounds include such as γ-glycidyloxyalkyltrialkoxysilanes such as γ-glycidyloxypropyltrimethoxysilane and γ-glycidyloxypropyltriethoxysilane.

The coating composition may contain two or more types of the silane coupling agent. Containing of the silane coupling agent may improve the interval adhesiveness, the shrinkage resistance, the anticorrosive property, the curability, and the adhesiveness to a foundation, and the like.

When the coating composition contains the silane coupling agent, a content of the silane coupling agent in the coating composition is preferably 0.5 parts by mass or more and 20 parts by mass or less, more preferably 0.75 parts by mass or more and 15 parts by mass or less, and further preferably 1 part by mass or more and 10 parts by mass or less relative to 100 parts by mass of the total content of the acryl resin (A) and the epoxy resin (B) from the viewpoint of improvement of the interval adhesiveness, the shrinkage resistance, the anticorrosive property, the curability, and the adhesiveness to a foundation by containing of the silane coupling agent.

Examples of the solvents include hydrocarbons, such as toluene, xylene, ethylbenzene, cyclopentane, octane, heptane, cyclohexane, and white spirit; ethers, such as dioxane, tetrahydrofuran, ethylene glycol monomethyl ether, ethylene glycol monoethyl ether, ethylene glycol monobutyl ether, ethylene glycol dibutyl ether, diethylene glycol monomethyl ether, diethylene glycol monoethyl ether, and butyl cellosolve; esters, such as butyl acetate, propyl acetate, benzyl acetate, ethylene glycol monomethyl ether acetate, and ethylene glycol monoethyl ether acetate; ketones, such as ethyl isobutyl ketone and methyl isobutyl ketone; and alcohols, such as n-butanol and propyl alcohol.

### <Preparation of Coating Composition for Undercoating>

The coating composition for undercoating according to the present invention can be prepared in the same manner as of a common anticorrosive paint that uses an epoxy resin. The coating composition is preferably a two-liquid type coating composition. The two-liquid type coating composition preferably consists of: a first agent (main agent) that contains at least the acryl resin and the epoxy resin; and a second agent (curing agent) that contains at least the amine-type curing agent. Both of the first agent and the second agent may contain the solvent. The second agent preferably contains the curing accelerator such as the tertiary amine-type curing accelerator. As for the two-liquid type coating composition, the first agent and the second agent are typically mixed immediately before use, and applied on an object to be coated.

In the two-liquid type coating composition, the acryl resin, the mica, and other blending components may be blended in either of the first agent and the second agent, or may be blended in both of them. The acryl resin and the mica are typically blended in the first agent.

### <Applying of Coating Composition for Undercoating>

The coating composition can be applied on an object to be coated by a common method such as a brush, a roller, and a spray. In the case of the two-liquid type coating composition, the coating composition obtained by mixing the first agent and the second agent immediately before use is applied by using the above method. The coating composition obtained by mixing the first agent and the second agent is applied on an object to be coated within a pot life after the mixing of the first agent and the second agent. The coating composition of the present invention typically exhibits a pot life of approximately 30 minutes to 8 hours. After the applying, a drying treatment may be performed to form an anticorrosive coating film. The drying temperature is typically a normal temperature (approximately 20 to 35°C), but the drying may be performed at a temperature lower than the normal temperature.

The object to be coated (target on which the coating composition is to be applied) is not particularly limited as long as anticorrosion is required, and may be, for example, articles such as watercrafts (such as an inner surface of a ballast tank of watercrafts, a ship bottom part, and an outer plate part), and in addition, marine structures such as a bridge, a tank, a plant (such as a petroleum plant), and a pipe. A material of a surface of the object to be coated on which the coating composition is to be applied may be ferrous metal such as steel, nonferrous metal, concreate, a coating film formed from a paint such as an old coating film, and the like, for example. The old coating film refers to a coating film or a part thereof that has been previously formed and that has been subjected to use.

The coating composition can be suitably applied for a method for forming a coating film comprising forming an undercoating film on a substrate (surface of an object to be coated). For example, the coating composition can be suitably applied for a method for manufacturing a multilayer coating film comprising: forming an undercoating film on a substrate; and forming a finish coating film on the undercoating film. In these methods, the coating composition may be used for forming the undercoating film. The undercoating film may have a multilayer structure of a plurality of coating films, and in this case, the coating composition according to the present invention is preferably used for at least forming an undercoating film on an outermost surface (contacted with a finish coating film).

A surface of the object to be coated, which is a foundation of the undercoating film formed from the coating composition, may be a surface of a coating film subjected to antirust coating, shop coating, organic or inorganic zinc-primer coating, and the like. The surface of the object to be coated may be subjected to a blasting treatment.

A film thickness of the anticorrosive coating film formed from the coating composition may be appropriate depending on a type, use, and the like of the object to be coated, and is typically approximately 10 µm or more and 500 µm or less of a dried film thickness. The anticorrosive coating film formed from the coating composition may form a dried coating film that has a desired film thickness by applying the composition a plurality of times. In this case, a coating amount in one time is not particularly limited, and the composition is typically applied so that a dried film thickness of each coating is 10 µm or more and 500 µm or less. In a case of applying a plurality of times, the dried coating film that has the desired film thickness may be obtained by applying a plurality of wet coating films and then drying the coating films, or the dried coating film that has the desired film thickness may be obtained by forming a plurality of dried coating films.

As a finishing paint used for a finish coating film formed on the anticorrosive coating film, paints commonly used for an anticorrosive coating may be used. Specific examples of the finishing paint include an oil-based paint, a long-oil phthalic acid resin paint, a silicone-alkyd resin paint, a phenol resin paint, a rubber chloride-based resin paint, an epoxy resin paint, a modified epoxy resin paint, a tar epoxy resin paint, a vinyl chloride resin paint, a polyurethane resin paint, a fluororesin paint, a silicone-modified resin paint, and antifouling paints to prevent organism adhesion, and the like. Examples of the antifouling paints include an acryl resin-based antifouling paint and a vinyl resin-based antifouling, and the like. The finishing paint is preferably an epoxy resin paint, a polyurethane paint, a fluororesin paint, an acryl resin-based antifouling paint, and a vinyl resin-based antifouling paint, and the like. A dry film thickness of the finish coating film is typically approximately 10 µm or more and 300 µm or less.

The finishing paint may be the coating composition according to the present invention. An embodiment of the case where the coating composition of the present invention is the finishing paint is a case where the coating film composed of the coating composition according to the present invention is formed on an old coating film formed from the coating composition according to the present invention for, for example, repairing. A dried film thickness of the finish coating film formed from the anticorrosive coating composition according to the present invention is typically approximately 10 µm or more and 300 µm or less.

The anticorrosive coating film formed from the coating composition according to the present invention can have a good anticorrosive property, and can exhibit good interval adhesiveness, and furthermore, good shrinkage resistance.

### EXAMPLES

Hereinafter, the present invention will be described in more detail with Examples and Comparative Examples, but the present invention is not limited thereto. Unless otherwise described, "parts" and "%" in Examples and Comparative Examples are on mass basis.

### <Resin Manufacture Examples 1 to 14: Manufacture of Acryl Resins 1 to 14>

Into a four-neck flask equipped with a thermometer, a cooling tube, a stirrer, a dropping funnel, a nitrogen-feeding tube, and a temperature controller, [A] parts by mass of xylene as a solvent was added, and the mixture was retained at [B]°C. Then, a mixed liquid composed of monomers shown in Table 2 at amounts (unit: parts by mass) shown in the same table (total 100 parts by mass), [C] parts by mass of xylene as a solvent, and [D] parts by mass of tert-butylperoxy 2-ethylhexanoate as a radical polymerization initiator was added into the dropping funnel, this mixed liquid was added dropwise into the four-neck flask over 3 hours at a constant rate, and after the dropwise addition, the temperature was held for [E] minutes. Thereafter, a mixed liquid composed of [F] parts by mass of xylene and 0.3 parts by mass of tert-butylperoxy 2-ethylhexanoate were added dropwise into the four-neck flask over 30 minutes at a constant rate, and after the dropwise addition, the temperature was held for [G] hours to obtain each of resin compositions (solutions) 1 to 14 that contain acryl resins 1 to 14, respectively.

Table 1 summarizes the above values [A] to [G] in each of Resin Manufacture Examples 1 to 14.

**[Table 1]**

| | Resin Manufacture Example | | | | | | | | | | | | | |
|---|---|---|---|---|---|---|---|---|---|---|---|---|---|---|
| | 1 | 2 | 3 | 4 | 5 | 6 | 7 | 8 | 9 | 10 | 11 | 12 | 13 | 14 |
| Acryl resin No. | 1 | 2 | 3 | 4 | 5 | 6 | 7 | 8 | 9 | 10 | 11 | 12 | 13 | 14 |
| [A] | 35 | 35 | 35 | 35 | 50 | 35 | 35 | 35 | 40 | 35 | 35 | 35 | 35 | 70 |
| [B] | 98 | 95 | 90 | 90 | 110 | 90 | 95 | 98 | 110 | 98 | 98 | 98 | 85 | 120 |
| [C] | 15 | 15 | 10 | 10 | 24 | 20 | 15 | 20 | 15 | 20 | 15 | 15 | 10 | 20 |
| [D] | 1 | 1 | 0.8 | 0.7 | 1.5 | 1 | 1.5 | 1 | 1 | 1 | 1 | 1 | 0.7 | 5 |
| [E] | 30 | 30 | 40 | 60 | 20 | 40 | 30 | 40 | 30 | 40 | 25 | 30 | 60 | 20 |
| [F] | 50 | 50 | 55 | 55 | 25 | 45 | 49 | 45 | 45 | 45 | 50 | 50 | 55 | 6 |
| [G] | 1.0 | 1.0 | 2.0 | 3.0 | 0.5 | 2.0 | 1.0 | 2.0 | 0.5 | 1.0 | 1.0 | 1.0 | 3.0 | 0.5 |

A glass transition temperature Tg, a solubility parameter SP, and a weight average molecular weight Mw of the obtained acryl resins 1 to 14, and a solid content of the resin compositions 1 to 14 were measured. Table 2 collectively shows the results. The measurement methods were as follows.

### [i] Glass Transition Temperature Tg

In accordance with JIS K 7121, the glass transition temperature Tg was measured by using a differential scanning calorimeter (DSC). As the differential scanning calorimeter (DSC), "X-DSC7000", manufactured by SII Nanotechnology Inc., was used.

### [ii] Solubility Parameter SP

The solubility parameter SP was determined by the aforementioned method.

### [iii] Weight Average Molecular Weight Mw

The weight average molecular weight Mw of the acryl resin was a weight average molecular weight measured by GPC in terms of polystyrene. The measurement conditions were as follows.
Apparatus: "HLC-8220GPC", manufactured by Tosoh Corporation
Column: TSKgel SuperHZM-M × 2
Eluent: Tetrahydrofuran
Measurement temperature: 35°C
Detector: RI

### [iv] Solid Content

The solid content was calculated in accordance with the following formula. Solid content (mass%) = 100 × (Total mass of raw materials used for preparing resin composition except for solvent) / (Mass of obtained resin composition)

**[Table 2]**

| | | Resin Manufacture Example | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Acryl resin No. | | 1 | 2 | 3 | 4 | 5 | 6 | 7 | 8 | 9 | 10 | 11 | 12 | 13 | 14 |
| Monomer | (1) n-BA | 10 | 10 | 13 | 5 | 7 | 4 | 18 | | 30 | 24 | 4 | | | 12 |
| | (2) MMA | | | 15 | | | | 35 | 53 | 20 | 37 | | | | 36 |
| | (3) ST | 55 | 30 | 72 | 65 | 68 | 71 | | 11 | 50 | | 22 | 84 | 15 | 52 |
| | (4) EA | | | | | 25 | | | | | | | 2 | | |
| | (5) HEMA | 35 | 60 | | 30 | | 25 | 47 | 36 | | | 74 | | 38 | |
| | (6) n-BMA | | | | | | | | | | 4 | | | 47 | |
| | (7) EHMA | | | | | | | | | | | | 14 | | |
| | (8) CHMA | | | | | | | | | | 35 | | | | |
| | Total | 100 | 100 | 100 | 100 | 100 | 100 | 100 | 100 | 100 | 100 | 100 | 100 | 100 | 100 |
| Solubility parameter SP | | 10.5 | 11.7 | 9.2 | 10.3 | 9.3 | 10.0 | 11.8 | 11.5 | 9.4 | 9.8 | 12.3 | 8.8 | 10.8 | 9.6 |
| Weight average molecular weight Mw (×10⁴) | | 5.0 | 6.5 | 8.0 | 9.2 | 0.6 | 7.0 | 4.5 | 5.5 | 2.8 | 6.0 | 4.8 | 5.0 | 10.0 | 0.09 |
| Glass transition temperature Tg (°C) | | 60 | 50 | 70 | 75 | 45 | 78 | 42 | 85 | 35 | 45 | 58 | 76 | 43 | 74 |
| Solid content (mass%) | | 50 | 50 | 50 | 50 | 50 | 50 | 50 | 50 | 50 | 50 | 50 | 50 | 50 | 50 |

Details of Abbreviations of the monomers shown in Table 2 are as follows.
(1) n-BA: n-Butyl acrylate
(2) MMA: Methyl methacrylate
(3) ST: Styrene
(4) EA: Ethyl acrylate
(5) HEMA: 2-Hyroxyethyl methacrylate
(6) n-BMA: n-Butyl methacrylate
(7) EHMA: 2-Ethylhexyl methacrylate
(8) CHMA: Cyclohexyl methacrylate

### <Examples 1 to 35 and Comparative Examples 1 to 8>

The blending components were mixed in accordance with the formulation shown in Table 3 to Table 7 for preparing each of a first agent (main agent) and a second agent (curing agent) to obtain a two-liquid type anticorrosive coating composition. The unit of blending amount shown in the tables is parts by mass of the component as it is.

In the tables, the term "Number of parts of acryl resin / 100 parts of epoxy resin" means a content (parts by mass) of the acryl resin relative to 100 parts by mass of a content of the epoxy resin. The term "Number of parts of mica / 100 parts of resin" means a content (parts by mass) of the mica relative to 100 parts by mass of a total content of the acryl resin and the epoxy resin. The term "Number of parts of curing accelerator / 100 parts of epoxy resin" means a content (parts by mass) of the curing accelerator (curing accelerators 1 to 3) relative to 100 parts by mass of the content of the epoxy resin.

Details of the blending components shown in Table 3 to Table 7 are as follows.
[1] Epoxy resin 1: "jER 828", manufactured by Mitsubishi Chemical Corporation, bisphenol A-type epoxy resin, weight average molecular weight: 370, SP: 11.5, epoxy equivalent: 184 to 194, non-volatile content: 100 mass%
[2] Epoxy resin 2: "jER 1001", manufactured by Mitsubishi Chemical Corporation, bisphenol A-type epoxy resin, weight average molecular weight: 900, SP: 10.8, epoxy equivalent: 450 to 500, non-volatile content: 100 mass%
[3] Epoxy resin 3: "jER 1003", manufactured by Mitsubishi Chemical Corporation, bisphenol A-type epoxy resin, weight average molecular weight: 1,300, SP: 10.6, epoxy equivalent: 670 to 770, non-volatile content: 100 mass%
[4] Epoxy resin 4: "Epotohto YD-907", manufactured by NIPPON STEEL Chemical & Material Co., Ltd., bisphenol A-type epoxy resin, weight average molecular weight: 3,000, SP: 11.3, epoxy equivalent: 1300 to 1700, non-volatile content: 100 mass%
[5] Mica 1: "MICA POWDER W-5", manufactured by Lingshou Huajing Mica Co., Ltd., aspect ratio: 26, non-volatile content: 100 mass%
[6] Mica 2: "MICA POWDER W-7", manufactured by Lingshou Huajing Mica Co., Ltd., aspect ratio: 14, non-volatile content: 100 mass%
[7] Mica 3: "MT-MICA D325W", manufactured by MinTech International Inc., aspect ratio: 18, non-volatile content: 100 mass%
[8] Mica 4: "Muscovite 200M", manufactured by Kirara Corporation, aspect ratio: 57, non-volatile content: 100 mass%
[9] Mica 5, "M101", manufactured by SHIRAISHI CALCIUM KAISHA, LTD., aspect ratio: 7, non-volatile content: 100 mass%
[10] Pigment 1: "CR50", ISHIHARA SANGYO KAISHA, LTD., titanium oxide (white pigment), non-volatile content: 100 mass%
[11] Pigment 2: "TAROX Synthetic Iron Oxide LL-XLO", manufactured by Titan Kogyo, Ltd., yellow iron oxide, non-volatile content: 100 mass%
[12] Pigment 3: "Talc 34-N", manufactured by FUJI TALC INDUSTRIAL CO., LTD., non-volatile content: 100 mass%
[13] Pigment 4: "Unispar PG-K10", manufactured by Sibelco Japan Ltd., feldspar, non-volatile content: 100 mass%
[14] Pigment 5: "Barite Powder FBA", manufactured by FUJI TALC INDUSTRIAL CO., LTD., barium sulfate, non-volatile content: 100 mass%
[15] Additive 1: "DYNASYLAN GLYMO", manufactured by EVONIK DEGUSSA GmbH, silane coupling agent, γ-glycidyloxypropyltrimethoxysilane, non-volatile content: 100 mass%
[16] Additive 2: "DISPARLON 6700", manufactured by Kusumoto Chemicals, Ltd., anti-sagging agent, non-volatile content: 100 mass%
[17] Amine-type curing agent 1: "ANCAMIDE 2050", manufactured by Air Products and Chemicals, Inc., polyamideamine curing agent, dimer acid-modified aliphatic polyamideamine (amine component: mixture of triethylenetetramine and tetraethylenepentamine), amine equivalent: 225 mgKOH/g, non-volatile component: 69 mass%
[18] Amine-type curing agent 2: "SUNMIDE 308D-65T", manufactured by Air Products and Chemicals, Inc., polyamideamine curing agent, dimer acid-modified aliphatic polyamideamine (amine component: pentaethylenehexamine), amine equivalent: 180 to 200 mgKOH/g, non-volatile component: 65 mass%
[19] Amine-type curing agent 3: "KBM-603", manufactured by Shin-Etsu Chemical Co., Ltd., aminosilane, a silane coupling agent that has an ethylenediamine structure
[20] Curing accelerator 1: 2,4,6-tris(dimethylaminomethyl)phenol (TAP), purity: 100 mass%
[21] Curing accelerator 2: dimethylaminoethanol (DMAE), purity: 100 mass%
[22] Curing accelerator 3: N,N-dimethylaniline (DMA), purity: 100 mass%
[23] Solvent 1: Xylene
[24] Solvent 2: Methyl isobutyl ketone

The first agent (main agent) and the second agent (curing agent) of the obtained two-liquid type anticorrosive coating composition were mixed at an amount ratio (parts/parts) shown in the column "First agent / Second agent" in Table 3 to Table 7, and the mixture was sufficiently stirred and uniformized. The obtained mixed paint (anticorrosive coating composition) was subjected to the following evaluation test. The results are shown in Table 3 to Table 7.

### [1] Evaluation Test on Finishing Adhesiveness (Test on Interval Adhesiveness)

### [1-1] When Finishing Paint is Antifouling Coating Composition

First, on a grid-blasted steel plate (7 cm × 15 cm × 3.2 mm), an inorganic zinc shop primer (trade name: NIPPON CERAMO), manufactured by Nippon Paint Marine Coatings Co., Ltd., was applied so that the dried coating film had a thickness of 15 µm, and the coating film was dried at a room temperature for seven days to produce a primer-treated steel plate. Then, on this primer-treated steel plate, the above anticorrosive coating composition immediately after the preparation was applied so that the dried coating film had a thickness of approximately 250 µm by using an air spray to obtain a painted specimen plate.

Then, the painted specimen plate was exposed to the outside for providing an interval for three days, and then (a) a hydrolysable acryl resin antifouling paint "ECOLOFLEX SPC 200" (manufactured by Nippon Paint Marine Coatings Co., Ltd.) was applied as a finishing paint with a spray on the anticorrosive coating film of the painted specimen plate so that the dried coating film had a thickness of approximately 150 µm. Then, the painted plate on which the finishing paint was applied was dried in a room for 24 hours. Thereafter, this painted plate was immersed in actual seawater for six months, and immediately after the taking out, a cross-cutting method in accordance with JIS K 5600-5-6 was performed with a gap pitch of 5 mm and a number of grids of nine to evaluate the finishing adhesiveness. The evaluation criteria were as follows. The evaluation results are preferably 3 or more.
5: A peeled area in the cut portion was 5% or less.
4: A peeled area in the cut portion was more than 5% and 15% or less.
3: A peeled area in the cut portion was more than 15% and 35% or less.
2: A peeled area in the cut portion was more than 35% and 65% or less.
1: A peeled area in the cut portion was more than 65% and 100% or less.

Using the following paints (b) to (f) that differed from the (a) as the finishing paint, the evaluation test on the finishing adhesiveness was performed as above. The results were same as the case of using the antifouling paint of the (a).
(b) Hydrolysable acryl resin antifouling paint "ECOLOFLEX SPC 150 HyB" (manufactured by Nippon Paint Marine Coatings Co., Ltd.)
(c) Hydrolysable acryl resin antifouling paint "ECOLOFLEX SPC 250 HyB" (manufactured by Nippon Paint Marine Coatings Co., Ltd.)
(d) Hydrolysable acryl resin antifouling paint "ECOLOFLEX SPC 600 HyB" (manufactured by Nippon Paint Marine Coatings Co., Ltd.)
(e) Hydrolysable acryl resin antifouling paint "LF-Sea 150 HyB" (manufactured by Nippon Paint Marine Coatings Co., Ltd.)
(f) Hydrolysable acryl resin antifouling paint "LF-Sea 250 HyB" (manufactured by Nippon Paint Marine Coatings Co., Ltd.)

### [1-2] When Finishing Paint is a Paint Other Than Antifouling Coating Composition

An evaluation test on the finishing adhesiveness was performed in the same manner as in the [1-1] except that: (g) Nippon A-Marine Finish (manufactured by Nippon Paint Marine Coatings Co., Ltd.), which was an acryl resin paint, was used as the finishing paint; and the interval until applying of the finishing paint was changed from three days to seven days. In this case, the finish paint was applied with a spray so that the dried coating film thickness was approximately 125 µm. The evaluation criteria were same as of the [1-1]. The evaluation results are preferably 3 or more.

An evaluation test on the finishing adhesiveness was performed in the same manner as above except that: the following paints (h) to (m), which differed from the above (g) as the finishing paint; and the dried coating film thickness of the finish coating film was changed as follows. The results were same as the case of using the finishing paint (g).
(h) Epoxy resin paint "NIPPON EPOXY FINISH M" (manufactured by Nippon Paint Marine Coatings Co., Ltd.), dried coating film thickness: 100 µm
(i) Alkyd resin paint "CR MARINE FINISH" (manufactured by Nippon Paint Marine Coatings Co., Ltd.), dried coating film thickness: 35 µm
(j) Acryl resin paint "NIPPON A-MARINE FINISH" (manufactured by Nippon Paint Marine Coatings Co., Ltd.), dried coating film thickness: 50 µm
(k) Urethane resin paint "POLYURE MIGHTYLAC M" (manufactured by Nippon Paint Marine Coatings Co., Ltd.), dried coating film thickness: 30 µm × 2 (which meant that a dried coating film with 30 µm in thickness was formed, and then a dried coating film with 30 µm in thickness was further formed thereon)
(1) Epoxy resin paint "NOA A/C II" (manufactured by Nippon Paint Marine Coatings Co., Ltd.), dried coating film thickness: 75 µm
(m) Epoxy resin paint "NIPPON E-MARINE A/C II" (manufactured by Nippon Paint Marine Coatings Co., Ltd.), dried coating film thickness: 75 µm

### [2] Evaluation Test on Shrinkage Resistance

First, on a tin plate (29.7 cm × 42 cm × 0.3 mm), (j) acryl resin paint "NIPPON A-MARINE FINISH" (manufactured by Nippon Paint Marine Coatings Co., Ltd.) was applied so that the dried coating film thickness was approximately 50 µm, and the coating film was dried at a room temperature for one day. Then, the above anticorrosive coating composition immediately after the preparation was applied so that the dried coating film thickness was approximately 100 µm by using an air spray, and the coating film was dried for three days under an atmosphere of 20°C × 65%RH to form an anticorrosive coating film.

Thereafter, on the anticorrosive coating film, (j) acryl resin paint "NIPPON A-MARINE FINISH" (manufactured by Nippon Paint Marine Coatings Co., Ltd.) was applied by using an applicator (20 MIL), and the coating film was dried in a room for 24 hours to produce a painted specimen plate composed of three layers of the coating film of the acryl resin paint (which corresponded to a finish coating film) / the anticorrosive coating film (undercoating film) / coating film of the acryl resin paint (which corresponded to a finish coating film). Generation of shrinkage was visually observed. The evaluation criteria were as follows. The evaluation results are preferably 3 or more.
5: No shrinkage is generated.
4: Small shrinkage is generated only on the edge.
3: A generation area of small shrinkage is 20% or less.
2: A generation area of small shrinkage is more than 20% and 100% or less.
1: Small shrinkage aggregates to generate large shrinkage.

In the above, the small shrinkage refers to shrinkage that cannot be visually observed at a place distanced with 5 m from the painted specimen plate. The large shrinkage refers to shrinkage that can be visually observed at a place distanced with 5 m from the painted specimen plate.

In addition, an evaluation test on shrinkage resistance was performed as above by using the above paints (h) and (k), which differed from the "NIPPON A-MARINE FINISH". The results were same as the case of using the (j) "NIPPON A-MARINE FINISH".

**[Table 3]**

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| First agent | Acryl resin | Acryl resin 1 | 14 | | | | | | | | | |
| | | Acryl resin 2 | | 14 | | | | | | | | |
| | | Acryl resin 3 | | | 14 | | | | | | | |
| | | Acryl resin 4 | | | | 14 | | | | | | |
| | | Acryl resin 5 | | | | | 14 | | | | | |
| | | Acryl resin 6 | | | | | | 14 | | | | |
| | | Acryl resin 7 | | | | | | | 14 | | | |
| | | Acryl resin 8 | | | | | | | | 14 | | |
| | | Acryl resin 9 | | | | | | | | | 14 | |
| | | Acryl resin 10 | | | | | | | | | | 14 |
| | | Acryl resin 11 | | | | | | | | | | |
| | | Acryl resin 12 | | | | | | | | | | |
| | | Acryl resin 13 | | | | | | | | | | |
| | | Acryl resin 14 | | | | | | | | | | |
| | Epoxy resin | Epoxy resin 1 | 25 | 25 | 25 | 25 | 25 | 25 | 25 | 25 | 25 | 25 |
| | | Epoxy resin 2 | | | | | | | | | | |
| | | Epoxy resin 3 | | | | | | | | | | |
| | | Epoxy resin 4 | | | | | | | | | | |
| | Mica | Mica 1 | | | | | | | | | | |
| | | Mica 2 | | | | | | | | | | |
| | | Mica 3 | | | | | | | | | | |
| | | Mica 4 | | | | | | | | | | |
| | | Mica 5 | | | | | | | | | | |
| | Other pigments | Pigment 1 | 0.7 | 0.7 | 0.7 | 0.7 | 0.7 | 0.7 | 0.7 | 0.7 | 0.7 | 0.7 |
| | | Pigment 2 | 0.7 | 0.7 | 0.7 | 0.7 | 0.7 | 0.7 | 0.7 | 0.7 | 0.7 | 0.7 |
| | | Pigment 3 | 28.2 | 28.2 | 28.2 | 28.2 | 28.2 | 28.2 | 28.2 | 28.2 | 28.2 | 28.2 |
| | | Pigment 4 | 20 | 20 | 20 | 20 | 20 | 20 | 20 | 20 | 20 | 20 |
| | | Pigment 5 | | | | | | | | | | |
| | Additive | Additive 1 | 0.7 | 0.7 | 0.7 | 0.7 | 0.7 | 0.7 | 0.7 | 0.7 | 0.7 | 0.7 |
| | | Additive 2 | 0.7 | 0.7 | 0.7 | 0.7 | 0.7 | 0.7 | 0.7 | 0.7 | 0.7 | 0.7 |
| | Solvent | Solvent 1 | 2 | 2 | 2 | 2 | 2 | 2 | 2 | 2 | 2 | 2 |
| | | Solvent 2 | 8 | 8 | 8 | 8 | 8 | 8 | 8 | 8 | 8 | 8 |
| | Total | | 100 | 100 | 100 | 100 | 100 | 100 | 100 | 100 | 100 | 100 |
| | Number of parts of acryl resin / 100 parts of epoxy resin | | 28 | 28 | 28 | 28 | 28 | 28 | 28 | 28 | 28 | 28 |
| | Number of parts of mica / 100 parts of resin | | | | | | | | | | | |
| Second agent | Amine-type curing agent | Amine-type curing agent 1 | 34 | 34 | 34 | 34 | 34 | 34 | 34 | 34 | 34 | 34 |
| | | Amine-type curing agent 2 | 36 | 36 | 36 | 36 | 36 | 36 | 36 | 36 | 36 | 36 |
| | | Amine-type curing agent 3 | | | | | | | | | | |
| | Curing accelerator | Curing accelerator 1 | | | | | | | | | | |
| | | Curing accelerator 2 | | | | | | | | | | |
| | | Curing accelerator 3 | | | | | | | | | | |
| | Solvent | Solvent 1 | 30 | 30 | 30 | 30 | 30 | 30 | 30 | 30 | 30 | 30 |
| | Total | | 100 | 100 | 100 | 100 | 100 | 100 | 100 | 100 | 100 | 100 |
| | Number of parts of curing accelerator / 100 parts of epoxy resin | | | | | | | | | | | |
| First agent / Second agent | | | 85/15 | 85/15 | 85/15 | 85/15 | 85/15 | 85/15 | 85/15 | 85/15 | 85/15 | 85/15 |
| Finishing adhesiveness evaluation | | [1-1] Finishing paint (a) | 4 | 4 | 4 | 3 | 3 | 4 | 4 | 3 | 3 | 3 |
| | | [1-2] Finishing paint (g) | 4 | 3 | 3 | 4 | 4 | 3 | 3 | 3 | 3 | 3 |
| Shrinkage resistance evaluation | | | 3 | 3 | 3 | 3 | 3 | 3 | 3 | 3 | 3 | 3 |

**[Table 4]**

| | | | Example | | | | | | | |
|---|---|---|---|---|---|---|---|---|---|---|
| | | | 11 | 12 | 13 | 14 | 15 | 16 | 17 | 18 |
| First agent | Acryl resin | Acryl resin 1 | 14 | 14 | 2 | 6 | 10 | 18 | 26 | 30 |
| | | Acryl resin 2 | | | | | | | | |
| | | Acryl resin 3 | | | | | | | | |
| | | Acryl resin 4 | | | | | | | | |
| | | Acryl resin 5 | | | | | | | | |
| | | Acryl resin 6 | | | | | | | | |
| | | Acryl resin 7 | | | | | | | | |
| | | Acryl resin 8 | | | | | | | | |
| | | Acryl resin 9 | | | | | | | | |
| | | Acryl resin 10 | | | | | | | | |
| | | Acryl resin 11 | | | | | | | | |
| | | Acryl resin 12 | | | | | | | | |
| | | Acryl resin 13 | | | | | | | | |
| | | Acryl resin 14 | | | | | | | | |
| | Epoxy resin | Epoxy resin 1 | | | 25 | 25 | 25 | 25 | 25 | 25 |
| | | Epoxy resin 2 | 25 | | | | | | | |
| | | Epoxy resin 3 | | 25 | | | | | | |
| | | Epoxy resin 4 | | | | | | | | |
| | Mica | Mica 1 | | | | | | | | |
| | | Mica 2 | | | | | | | | |
| | | Mica 3 | | | | | | | | |
| | | Mica 4 | | | | | | | | |
| | | Mica 5 | | | | | | | | |
| | Other pigments | Pigment 1 | 0.7 | 0.7 | 0.7 | 0.7 | 0.7 | 0.7 | 0.7 | 0.7 |
| | | Pigment 2 | 0.7 | 0.7 | 0.7 | 0.7 | 0.7 | 0.7 | 0.7 | 0.7 |
| | | Pigment 3 | 28.2 | 28.2 | 28.2 | 28.2 | 28.2 | 28.2 | 28.2 | 28.2 |
| | | Pigment 4 | 20 | 20 | 20 | 20 | 20 | 20 | 20 | 20 |
| | | Pigment 5 | | | 6 | 5 | 2 | | | |
| | Additive | Additive 1 | 0.7 | 0.7 | 0.7 | 0.7 | 0.7 | 0.7 | 0.7 | 0.7 |
| | | Additive 2 | 0.7 | 0.7 | 0.7 | 0.7 | 0.7 | 0.7 | 0.7 | 0.7 |
| | Solvent | Solvent 1 | 2 | 2 | 8 | 5 | 4 | 0 | 0 | 0 |
| | | Solvent 2 | 8 | 8 | 8 | 8 | 8 | 8 | 3 | 2 |
| | Total | | 100 | 100 | 100 | 100 | 100 | 102 | 105 | 108 |
| | Number of parts of acryl resin / 100 parts of epoxy resin | | 28 | 28 | 4 | 12 | 20 | 36 | 52 | 60 |
| | Number of parts of mica / 100 parts of resin | | | | | | | | | |
| Second agent | Amine-type curing agent | Amine-type curing agent 1 | 34 | 34 | 34 | 34 | 34 | 34 | 34 | 34 |
| | | Amine-type curing agent 2 | 36 | 36 | 36 | 36 | 36 | 36 | 36 | 36 |
| | | Amine-type curing agent 3 | | | | | | | | |
| | Curing accelerator | Curing accelerator 1 | | | | | | | | |
| | | Curing accelerator 2 | | | | | | | | |
| | | Curing accelerator 3 | | | | | | | | |
| | Solvent | Solvent 1 | 30 | 30 | 30 | 30 | 30 | 30 | 30 | 30 |
| | Total | | 100 | 100 | 100 | 100 | 100 | 100 | 100 | 100 |
| | Number of parts of curing accelerator / 100 parts of epoxy resin | | | | | | | | | |
| First agent / Second agent | | | 85/15 | 85/15 | 85/15 | 85/15 | 85/15 | 85/15 | 85/15 | 85/15 |
| Finishing adhesiveness evaluation | | [1-1] Finishing paint (a) | 4 | 4 | 3 | 3 | 3 | 4 | 4 | 3 |
| | | [1-2] Finishing paint (g) | 4 | 4 | 3 | 4 | 4 | 4 | 3 | 3 |
| Shrinkage resistance evaluation | | | 3 | 3 | 3 | 3 | 3 | 3 | 3 | 3 |

**[Table 5]**

| | | | Example | | | | | | | |
|---|---|---|---|---|---|---|---|---|---|---|
| | | | 19 | 20 | 21 | 22 | 23 | 24 | 25 | 26 |
| First agent | Acryl resin | Acryl resin 1 | 14 | 14 | 14 | 14 | 14 | 14 | 14 | 14 |
| | | Acryl resin 2 | | | | | | | | |
| | | Acryl resin 3 | | | | | | | | |
| | | Acryl resin 4 | | | | | | | | |
| | | Acryl resin 5 | | | | | | | | |
| | | Acryl resin 6 | | | | | | | | |
| | | Acryl resin 7 | | | | | | | | |
| | | Acryl resin 8 | | | | | | | | |
| | | Acryl resin 9 | | | | | | | | |
| | | Acryl resin 10 | | | | | | | | |
| | | Acryl resin 11 | | | | | | | | |
| | | Acryl resin 12 | | | | | | | | |
| | | Acryl resin 13 | | | | | | | | |
| | | Acryl resin 14 | | | | | | | | |
| | Epoxy resin | Epoxy resin 1 | 25 | 25 | 25 | 25 | 25 | 25 | 25 | 25 |
| | | Epoxy resin 2 | | | | | | | | |
| | | Epoxy resin 3 | | | | | | | | |
| | | Epoxy resin 4 | | | | | | | | |
| | Mica | Mica 1 | | | | | | | | |
| | | Mica 2 | | | | | | | | |
| | | Mica 3 | | | | | | | | |
| | | Mica 4 | | | | | | | | |
| | | Mica 5 | | | | | | | | |
| | Other pigments | Pigment 1 | 0.7 | 0.7 | 0.7 | 0.7 | 0.7 | 0.7 | 0.7 | 0.7 |
| | | Pigment 2 | 0.7 | 0.7 | 0.7 | 0.7 | 0.7 | 0.7 | 0.7 | 0.7 |
| | | Pigment 3 | 28.2 | 28.2 | 28.2 | 28.2 | 28.2 | 28.2 | 28.2 | 28.2 |
| | | Pigment 4 | 20 | 20 | 20 | 20 | 20 | 20 | 20 | 20 |
| | | Pigment 5 | | | | | | | | |
| | Additive | Additive 1 | 0.7 | 0.7 | 0.7 | 0.7 | 0.7 | 0.7 | 0.7 | 0.7 |
| | | Additive 2 | 0.7 | 0.7 | 0.7 | 0.7 | 0.7 | 0.7 | 0.7 | 0.7 |
| | Solvent | Solvent 1 | 2 | 2 | 2 | 2 | 2 | 2 | 2 | 2 |
| | | Solvent 2 | 8 | 8 | 8 | 8 | 8 | 8 | 8 | 8 |
| | Total | | 100 | 100 | 100 | 100 | 100 | 100 | 100 | 100 |
| | Number of parts of acryl resin / 100 parts of epoxy resin | | 28 | 28 | 28 | 28 | 28 | 28 | 28 | 28 |
| | Number of parts of mica / 100 parts of resin | | | | | | | | | |
| Second agent | Amine-type curing agent | Amine-type curing agent 1 | 34 | 34 | 34 | 34 | 34 | 34 | 34 | 34 |
| | | Amine-type curing agent 2 | 36 | 36 | 36 | 36 | 36 | 36 | 36 | 36 |
| | | Amine-type curing agent 3 | | | | | | | | 10 |
| | Curing accelerator | Curing accelerator 1 | 0.2 | 1.5 | 7 | 14 | 22 | | | |
| | | Curing accelerator 2 | | | | | | 7 | | |
| | | Curing accelerator 3 | | | | | | | 7 | |
| | Solvent | Solvent 1 | 29.8 | 28.5 | 23 | 16 | 8 | 23 | 23 | 20 |
| | Total | | 100 | 100 | 100 | 100 | 100 | 100 | 100 | 100 |
| | Number of parts of curing accelerator / 100 parts of epoxy resin | | 0.1 | 1.1 | 4.9 | 9.9 | 15.5 | 4.9 | 4.9 | 4.9 |
| First agent / Second agent | | | 85/15 | 85/15 | 85/15 | 85/15 | 85/15 | 85/15 | 85/15 | 85/15 |
| Finishing adhesiveness evaluation | | [1-1] Finishing paint (a) | 4 | 4 | 4 | 4 | 4 | 4 | 4 | 3 |
| | | [1-2] Finishing paint (g) | 4 | 4 | 4 | 4 | 4 | 4 | 4 | 3 |
| Shrinkage resistance evaluation | | | 3 | 4 | 4 | 4 | 3 | 4 | 3 | 3 |

**[Table 6]**

| | | | Example | | | | | | | | |
|---|---|---|---|---|---|---|---|---|---|---|---|
| | | | 27 | 28 | 29 | 30 | 31 | 32 | 33 | 34 | 35 |
| First agent | Acryl resin | Acryl resin 1 | 14 | 14 | 14 | 14 | 14 | 14 | 14 | 14 | 14 |
| | | Acryl resin 2 | | | | | | | | | |
| | | Acryl resin 3 | | | | | | | | | |
| | | Acryl resin 4 | | | | | | | | | |
| | | Acryl resin 5 | | | | | | | | | |
| | | Acryl resin 6 | | | | | | | | | |
| | | Acryl resin 7 | | | | | | | | | |
| | | Acryl resin 8 | | | | | | | | | |
| | | Acryl resin 9 | | | | | | | | | |
| | | Acryl resin 10 | | | | | | | | | |
| | | Acryl resin 11 | | | | | | | | | |
| | | Acryl resin 12 | | | | | | | | | |
| | | Acryl resin 13 | | | | | | | | | |
| | | Acryl resin 14 | | | | | | | | | |
| | Epoxy resin | Epoxy resin 1 | 25 | 25 | 25 | 25 | 25 | 25 | 25 | 25 | 25 |
| | | Epoxy resin 2 | | | | | | | | | |
| | | Epoxy resin 3 | | | | | | | | | |
| | | Epoxy resin 4 | | | | | | | | | |
| | Mica | Mica 1 | 0.81 | 1.35 | 10 | 24.3 | 37 | | | | |
| | | Mica 2 | | | | | | 10 | | | |
| | | Mica 3 | | | | | | | 10 | | |
| | | Mica 4 | | | | | | | | 10 | |
| | | Mica 5 | | | | | | | | | 10 |
| | Other pigments | Pigment 1 | 0.7 | 0.7 | 0.7 | 0.7 | 0.7 | 0.7 | 0.7 | 0.7 | 0.7 |
| | | Pigment 2 | 0.7 | 0.7 | 0.7 | 0.7 | 0.7 | 0.7 | 0.7 | 0.7 | 0.7 |
| | | Pigment 3 | 27.39 | 26.85 | 18.2 | 10.5 | 1.2 | 18.2 | 18.2 | 18.2 | 18.2 |
| | | Pigment 4 | 20 | 20 | 20 | 8 | 0 | 20 | 20 | 20 | 20 |
| | | Pigment 5 | | | | 5.4 | 10 | | | | |
| | Additive | Additive 1 | 0.7 | 0.7 | 0.7 | 0.7 | 0.7 | 0.7 | 0.7 | 0.7 | 0.7 |
| | | Additive 2 | 0.7 | 0.7 | 0.7 | 0.7 | 0.7 | 0.7 | 0.7 | 0.7 | 0.7 |
| | Solvent | Solvent 1 | 2 | 2 | 2 | 2 | 2 | 2 | 2 | 2 | 2 |
| | | Solvent 2 | 8 | 8 | 8 | 8 | 8 | 8 | 8 | 8 | 8 |
| | Total | | 100 | 100 | 100 | 100 | 100 | 100 | 100 | 100 | 100 |
| | Number of parts of acryl resin / 100 parts of epoxy resin | | 28 | 28 | 28 | 28 | 28 | 28 | 28 | 28 | 28 |
| | Number of parts of mica / 100 parts of resin | | 2.1 | 3.5 | 25.6 | 62.3 | 94.9 | 25.6 | 25.6 | 25.6 | 25.6 |
| Second agent | Amine-type curing agent | Amine-type curing agent 1 | 34 | 34 | 34 | 34 | 34 | 34 | 34 | 34 | 34 |
| | | Amine-type curing agent 2 | 36 | 36 | 36 | 36 | 36 | 36 | 36 | 36 | 36 |
| | | Amine-type curing agent 3 | | | | | | | | | |
| | Curing accelerator | Curing accelerator 1 | 7 | 7 | 7 | 7 | 7 | 7 | 7 | 7 | 7 |
| | | Curing accelerator 2 | | | | | | | | | |
| | | Curing accelerator 3 | | | | | | | | | |
| | Solvent | Solvent 1 | 23 | 23 | 23 | 23 | 23 | 23 | 23 | 23 | 23 |
| | Total | | 100 | 100 | 100 | 100 | 100 | 100 | 100 | 100 | 100 |
| | Number of parts of curing accelerator / 100 parts of epoxy resin | | 4.9 | 4.9 | 4.9 | 4.9 | 4.9 | 4.9 | 4.9 | 4.9 | 4.9 |
| First agent / Second agent | | | 85/15 | 85/15 | 85/15 | 85/15 | 85/15 | 85/15 | 85/15 | 85/15 | 85/15 |
| Finishing adhesiveness evaluation | | [1-1] Finishing paint (a) | 4 | 5 | 5 | 5 | 4 | 5 | 5 | 5 | 4 |
| | | [1-2] Finishing paint (g) | 4 | 5 | 5 | 5 | 4 | 5 | 5 | 5 | 4 |
| Shrinkage resistance evaluation | | | 4 | 4 | 5 | 5 | 4 | 5 | 5 | 5 | 4 |

**[Table 7]**

| | | | | Comparative Example | | | | | | | |
|---|---|---|---|---|---|---|---|---|---|---|---|
| | | | | 1 | 2 | 3 | 4 | 5 | 6 | 7 | 8 |
| First agent | Acryl resin | Acryl resin 1 | | | | | | | | | |
| | | Acryl resin 2 | | | | | | | | | |
| | | Acryl resin 3 | | | | | | | | | |
| | | Acryl resin 4 | | | | | | | | | |
| | | Acryl resin 5 | | | | | | | | | |
| | | Acryl resin 6 | | | | | | | | | |
| | | Acryl resin 7 | | | | | | | | | |
| | | Acryl resin 8 | | | | 14 | | | | | |
| | | Acryl resin 9 | | | | | | | | 14 | |
| | | Acryl resin 10 | | | | | | | | | |
| | | Acryl resin 11 | | 14 | 14 | | | | | | |
| | | Acryl resin 12 | | | | | 14 | | | | |
| | | Acryl resin 13 | | | | | | 14 | | | 14 |
| | | Acryl resin 14 | | | | | | | 14 | | |
| | Epoxy resin | Epoxy resin 1 | | | 25 | | 25 | 25 | 25 | | 25 |
| | | Epoxy resin 2 | | | | | | | | | |
| | | Epoxy resin 3 | | | | | | | | | |
| | | Epoxy resin 4 | | 25 | | 25 | | | | 25 | |
| | Mica | Mica 1 | | | | | | | | 10 | |
| | | Mica 2 | | | | | | | | | |
| | | Mica 3 | | | | | | | | | |
| | | Mica 4 | | | | | | | | | |
| | | Mica 5 | | | | | | | | | |
| | Other pigments | Pigment 1 | | 0.7 | 0.7 | 0.7 | 0.7 | 0.7 | 0.7 | 0.7 | 0.7 |
| | | Pigment 2 | | 0.7 | 0.7 | 0.7 | 0.7 | 0.7 | 0.7 | 0.7 | 0.7 |
| | | Pigment 3 | | 28.2 | 28.2 | 28.2 | 28.2 | 28.2 | 28.2 | 28.2 | 28.2 |
| | | Pigment 4 | | 20 | 20 | 20 | 20 | 20 | 20 | 20 | 20 |
| | | Pigment 5 | | | | | | | | | |
| | Additive | Additive 1 | | 0.7 | 0.7 | 0.7 | 0.7 | 0.7 | 0.7 | 0.7 | 0.7 |
| | | Additive 2 | | 0.7 | 0.7 | 0.7 | 0.7 | 0.7 | 0.7 | 0.7 | 0.7 |
| | Solvent | Solvent 1 | | 2 | 2 | 2 | 2 | 2 | 2 | 2 | 2 |
| | | Solvent 2 | | 8 | 8 | 8 | 8 | 8 | 8 | 8 | 8 |
| | Total | | | 100 | 100 | 100 | 100 | 100 | 100 | 110 | 100 |
| | Number of parts of acryl resin / 100 parts of epoxy resin | | | 28 | 28 | 28 | 28 | 28 | 28 | 28 | 28 |
| | Number of parts of mica / 100 parts of resin | | | | | | | | | 25.6 | |
| Second agent | Amine-type curing agent | Amine-type curing agent 1 | | 34 | 34 | 34 | 34 | 34 | 34 | 34 | 34 |
| | | Amine-type curing agent 2 | | 36 | 36 | 36 | 36 | 36 | 36 | 36 | 36 |
| | | Amine-type curing agent 3 | | | | | | | | | |
| | Curing accelerator | Curing accelerator 1 | | | | | | | | | 7 |
| | | Curing accelerator 2 | | | | | | | | | |
| | | Curing accelerator 3 | | | | | | | | | |
| | Solvent | Solvent 1 | | 30 | 30 | 30 | 30 | 30 | 30 | 30 | 23 |
| | Total | | | 100 | 100 | 100 | 100 | 100 | 100 | 100 | 100 |
| | Number of parts of curing accelerator / 100 parts of epoxy resin | | | | | | | | | | 4.9 |
| First agent / Second agent | | | | 85/15 | 85/15 | 85/15 | 85/15 | 85/15 | 85/15 | 85/15 | 85/15 |
| Finishing adhesiveness evaluation | | | [1-1] Finishing paint (a) | 1 | 2 | 2 | 2 | 1 | 1 | 1 | 1 |
| | | | [1-2] Finishing paint (g) | 1 | 1 | 1 | 2 | 2 | 2 | 1 | 2 |
| Shrinkage resistance evaluation | | | | 1 | 1 | 2 | 1 | 1 | 1 | 2 | 2 |

## Claims

1. A coating composition for undercoating, comprising:
an acryl resin; and
an epoxy resin, wherein
the acryl resin has a solubility parameter of 9.0 or more and 12 or less and a weight average molecular weight of 1,000 or more and 95,000 or less, and
wherein the epoxy resin has a solubility parameter of 10 or more and 12 or less and a weight average molecular weight of 250 or more and 2,500 or less.

2. The coating composition for undercoating according to claim 1, wherein a content of the acryl resin is 4 parts by mass or more and 60 parts by mass or less relative to 100 parts by mass of a content of the epoxy resin.

3. The coating composition for undercoating according to claim 1, further comprising an amine-type curing agent.

4. The coating composition for undercoating according to claim 3, further comprising a curing accelerator, wherein a content of the curing accelerator is 0.1 part by mass or more and 16 parts by mass or less relative to 100 parts by mass of a content of the epoxy resin.

5. The coating composition for undercoating according to claim 3, wherein
the coating composition for undercoating is a two-liquid type coating composition for undercoating consisting of a first agent and a second agent,
wherein the first agent contains the acryl resin and the epoxy resin, and
wherein the second agent contains the amine-type curing agent.

6. The coating composition for undercoating according to claim 1, further comprising a mica, wherein a content of the mica is 2 parts by mass or more and 95 parts by mass or less relative to 100 parts by mass of a total content of the acryl resin and the epoxy resin.

7. A coating film formed from the coating composition for undercoating according to any one of claims 1 to 6.

8. A method for forming a coating film, comprising forming an undercoating on a substrate with the coating composition for undercoating according to any one of claims 1 to 6.

9. A method for forming a multilayer coating film, comprising:
forming an undercoating film on a substrate with the coating composition for undercoating according to any one of claims 1 to 6; and
forming a finish coating film on the undercoating film with a coating composition for finish coating.

10. An article, comprising an undercoating film formed from the coating composition for undercoating according to any one of claims 1 to 6.

11. The article according to claim 10, further comprising a finish coating film on the undercoating film.

## Patentansprüche

1. Eine Beschichtungszusammensetzung für Grundbeschichtung, umfassend:
ein Acrylharz; und
ein Epoxidharz, wobei
das Acrylharz einen Löslichkeitsparameter von 9,0 oder mehr und 12 oder weniger und ein Gewichtsmittel des Molekulargewichts von 1000 oder mehr und 95000 oder weniger aufweist, und
wobei das Epoxidharz einen Löslichkeitsparameter von 10 oder mehr und 12 oder weniger und ein Gewichtsmittel des Molekulargewichts von 250 oder mehr und 2500 oder weniger aufweist.

2. Die Beschichtungszusammensetzung für Grundbeschichtung gemäß Anspruch 1, wobei ein Gehalt des Acrylharzes 4 Massenteile oder mehr und 60 Massenteile oder weniger, bezogen auf 100 Massenteile eines Gehalts des Epoxidharzes, beträgt.

3. Die Beschichtungszusammensetzung für Grundbeschichtung gemäß Anspruch 1, ferner umfassend ein Härtungsmittel vom Amintyp.

4. Die Beschichtungszusammensetzung für Grundbeschichtung gemäß Anspruch 3, ferner umfassend einen Härtungsbeschleuniger, wobei ein Gehalt des Härtungsbeschleunigers 0,1 Massenteile oder mehr und 16 Massenteile oder weniger, bezogen auf 100 Massenteile eines Gehalts des Epoxidharzes, beträgt.

5. Die Beschichtungszusammensetzung für Grundbeschichtung gemäß Anspruch 3, wobei
die Beschichtungszusammensetzung für Grundbeschichtung eine aus zwei Komponenten bestehende flüssige Beschichtungszusammensetzung für Grundbeschichtung, bestehend aus einem ersten Mittel und einem zweiten Mittel, ist,
wobei das erste Mittel das Acrylharz und das Epoxidharz enthält, und
wobei das zweite Mittel das Härtungsmittel vom Amintyp enthält.

6. Die Beschichtungszusammensetzung für Grundbeschichtung gemäß Anspruch 1, ferner umfassend einen Glimmer, wobei ein Gehalt des Glimmers 2 Massenteile oder mehr und 95 Massenteile oder weniger, bezogen auf 100 Massenteile eines Gesamtgehalts des Acrylharzes und des Epoxidharzes, beträgt.

7. Ein Beschichtungsfilm, welcher aus der Beschichtungszusammensetzung für Grundbeschichtung gemäß einem der Ansprüche 1 bis 6 gebildet ist.

8. Ein Verfahren zum Bilden eines Beschichtungsfilms, umfassend das Bilden einer Grundbeschichtung auf einem Träger mit der Beschichtungszusammensetzung für Grundbeschichtung gemäß einem der Ansprüche 1 bis 6.

9. Ein Verfahren zum Bilden eines mehrschichtigen Beschichtungsfilms, umfassend:
Bilden eines Grundbeschichtungsfilms auf einem Träger mit der Beschichtungszusammensetzung für Grundbeschichtung gemäß einem der Ansprüche 1 bis 6; und
Bilden eines Deckbeschichtungsfilms auf dem Grundbeschichtungsfilm mit einer Beschichtungszusammensetzung für Deckbeschichtung.

10. Ein Gegenstand, umfassend einen Grundbeschichtungsfilm gebildet aus der Beschichtungszusammensetzung für Grundbeschichtung gemäß einem der Ansprüche 1 bis 6.

11. Der Gegenstand gemäß Anspruch 10, ferner umfassend einen Deckbeschichtungsfilm auf dem Grundbeschichtungsfilm.

## Revendications

1. Composition de revêtement pour sous-couche, comprenant :
une résine acrylique ; et
une résine époxy,
dans laquelle la résine acrylique a un paramètre de solubilité de 9,0 ou plus et 12 ou moins et une masse moléculaire moyenne en masse de 1 000 ou plus et 95 000 ou moins, et
dans laquelle la résine époxy a un paramètre de solubilité de 10 ou plus et 12 ou moins et une masse moléculaire moyenne en masse de 250 ou plus et 2 500 ou moins.

2. Composition de revêtement pour sous-couche selon la revendication 1, dans laquelle la teneur en résine acrylique est de 4 parties en masse ou plus et 60 parties en masse ou moins pour 100 parties en masse de la teneur en résine époxy.

3. Composition de revêtement pour sous-couche selon la revendication 1, comprenant en outre un agent durcisseur de type amine.

4. Composition de revêtement pour sous-couche selon la revendication 3, comprenant en outre un accélérateur de durcissement, dans laquelle la teneur en accélérateur de durcissement est de 0,1 partie en masse ou plus et 16 parties en masse ou moins pour 100 parties en masse de la teneur en résine époxy.

5. Composition de revêtement pour sous-couche selon la revendication 3,
dans laquelle la composition de revêtement pour sous-couche est une composition de revêtement pour sous-couche de type à deux liquides consistant en un premier agent et un deuxième agent,
dans laquelle le premier agent contient la résine acrylique et la résine époxy, et
dans laquelle le deuxième agent contient l'agent durcisseur de type amine.

6. Composition de revêtement pour sous-couche selon la revendication 1, comprenant en outre un mica, dans laquelle la teneur en mica est de 2 parties en masse ou plus et 95 parties en masse ou moins pour 100 parties en masse de la teneur totale en résine acrylique et résine époxy.

7. Film de revêtement formé à partir de la composition de revêtement pour sous-couche selon l'une quelconque des revendications 1 à 6.

8. Méthode pour former un film de revêtement, comprenant la formation d'une sous-couche sur un substrat avec la composition de revêtement pour sous-couche selon l'une quelconque des revendications 1 à 6.

9. Méthode pour former un film de revêtement multicouche, comprenant :
la formation d'un film de sous-couche sur un substrat avec la composition de revêtement pour sous-couche selon l'une quelconque des revendications 1 à 6 ; et
la formation d'un film de revêtement de finition sur le film de sous-couche avec une composition de revêtement pour revêtement de finition.

10. Article comprenant un film de sous-couche formé à partir de la composition de revêtement pour sous-couche selon l'une quelconque des revendications 1 à 6.

11. Article selon la revendication 10, comprenant en outre un film de revêtement de finition sur le film de sous-couche.
